# EUROPÄISCHE PATENTANMELDUNG

(11) **EP 4 354 603 A1**
(43) Veröffentlichungstag der Anmeldung: **17.04.2024**
(21) Anmeldenummer: 23156513.6
(22) Anmeldetag: 14.02.2023
(51) Int. Cl.: H01M 50/107, H01M 10/052, H01M 50/516, H01M 50/528, H01M 50/552, H01M 50/569

(54) **FEDERKONTAKT, BATTERIEZELLE UND VERFAHREN ZUM HERSTELLEN DERSELBEN**

(30) Priorität: 14.10.2022 DE 102022104903
(71) Anmelder: Lisa Dräxlmaier GmbH, 84137 Vilsbiburg (DE)
(72) Erfinder: Holzmann, Robert, 84137 Vilsbiburg (DE)

(57) **Zusammenfassung**

Die vorliegende Erfindung bezieht sich auf einen Federkontakt (102) für eine Batteriezelle (100), wobei der Federkontakt (102) eine Schweißfläche (106) zum Verschweißen mit einem Pol (104) der Batteriezelle (100) und zumindest einen seitlich aus der Schweißfläche (106) ragenden, federnden Kontaktarm (108) zum Kontaktieren eines Kontaktpartners (200) der Batteriezelle (100) aufweist, wobei der Kontaktarm (108) aus einer Ebene der Schweißfläche (106) heraus zurück über die Schweißfläche (106) gebogen ist.

## Beschreibung

### Technisches Gebiet

Die vorliegende Erfindung betrifft einen Federkontakt für eine Batteriezelle, eine Batteriezelle mit einem Federkontakt, sowie ein Verfahren zum Herstellen solch einer Batteriezelle.

### Stand der Technik

Die vorliegende Erfindung wird im Folgenden hauptsächlich in Verbindung mit Traktionsbatterien für Fahrzeuge beschrieben.

Eine Traktionsbatterie kann aus mehreren Batteriemodulen bestehen. Die Batteriemodule können mehrere Batteriezellen aufweisen. Die Batteriezellen eines Batteriemoduls können elektrisch in Reihe geschaltet sein.

Die Batteriezellen können zylindrische Rundzellen sein. Die Rundzellen können unter Verwendung von Kontaktkronen elektrisch miteinander verbunden werden. Die Kontaktkronen können auf Pluspole der Batteriezellen geschweißt sein und in einem Außendurchmesser der Batteriezelle angeordnete, kronenartig aufgebogene Zinken aufweisen. Die Zinken können an einer Mantelfläche der nächsten Batteriezelle anliegen und so einen elektrischen Kontakt zwischen den Batteriezellen herstellen.

Die Zinken können beim Zusammenstecken der Batteriezellen geringfügig nach außen gebogen werden und dann mit einer Rückstellkraft auf die Mantelfläche drücken. Durch diese Elastizität kann die Kontaktkrone einen geringen Seitenversatz der verbundenen Batteriezellen kompensieren.

### Beschreibung der Erfindung

Eine Aufgabe der Erfindung ist es daher, unter Einsatz konstruktiv möglichst einfacher Mittel einen verbesserten Federkontakt für eine Batteriezelle, eine verbesserte Batteriezelle mit einem solchen Federkontakt, sowie ein verbessertes Verfahren zum Herstellen einer Batteriezelle bereitzustellen. Eine Verbesserung kann hierbei beispielsweise einen verbesserten axialen und lateralen Toleranzausgleich zwischen Batteriezellen betreffen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Bei dem hier vorgestellten Ansatz wird zwischen zwei Batteriezellen zumindest je ein in axialer Richtung federndes Kontaktelement angeordnet. Das Kontaktelement wird mit der Stirnseite einer der Batteriezellen verschweißt. Eine Bodenfläche der anderen Batteriezelle ist im Wesentlichen eben und kann unter Verwendung des federnden Kontaktelements über ihre gesamte Fläche kontaktiert werden, um Lagetoleranzen in mehreren Richtungen auszugleichen.

Durch den hier vorgestellten Ansatz kann ein lateraler Versatz, ein axialer Versatz und/oder ein Winkelversatz zwischen den Batteriezellen ausgeglichen werden. Das federnde Kontaktelement kann durch eine Rückstellkraft eine erforderliche Kontaktkraft auf die Bodenfläche ausüben, ohne die Batteriezellen zu beschädigen.

Gemäß einem ersten Aspekt der Erfindung wird ein Federkontakt für eine Batteriezelle vorgestellt, wobei der Federkontakt eine Schweißfläche zum Verschweißen mit einem Pol der Batteriezelle und zumindest einen seitlich aus der Schweißfläche ragenden, federnden Kontaktarm zum Kontaktieren eines Kontaktpartners der Batteriezelle aufweist, wobei der Kontaktarm aus einer Ebene der Schweißfläche heraus zurück über die Schweißfläche gebogen ist.

Gemäß einem zweiten Aspekt der Erfindung wird eine Batteriezelle mit einem Federkontakt gemäß dem ersten Aspekt der Erfindung vorgestellt, wobei die Schweißfläche auf einen Pol der Batteriezelle geschweißt ist und der zumindest eine Kontaktarm über eine von der Batteriezelle abgewandte Seite der Schweißfläche gebogen ist.

Gemäß einem dritten Aspekt der Erfindung wird ein Verfahren zum Herstellen einer Batteriezelle mit einem Federkontakt vorgestellt, wobei eine Schweißfläche des Federkontakts auf einen Pol der Batteriezelle geschweißt wird und zumindest ein seitlich aus der Schweißfläche ragender Kontaktarm des Federkontakts zurück über die Schweißfläche gebogen wird.

Eine Batteriezelle kann eine Rundzelle sein. Die Rundzelle kann ein im Wesentlichen zylindrisches Gehäuse aufweisen. Das Gehäuse kann eine im Wesentlichen ebene, geschlossene Bodenfläche aufweisen. An einer der Bodenfläche gegenüberliegenden Seite kann das Gehäuse durch einen Deckel verschlossen sein. Der Deckel kann von dem Gehäuse elektrisch isoliert sein und einen der elektrischen Pole der Batteriezelle ausbilden. Der Deckel kann einen Buckel beziehungsweise eine Erhebung aufweisen. Der Deckel kann insbesondere den Pluspol der Batteriezelle ausbilden. Der Minuspol der Batteriezelle kann durch das Gehäuse und die Bodenfläche ausgebildet sein.

Ein Federkontakt kann ein separat angefertigtes Metallteil sein. Der Federkontakt kann ein Stanzbiegeteil sein und aus einem Blechmaterial ausgeschnitten und gebogen sein. Der Federkontakt kann einstückig sein. Eine Schweißfläche kann eine zum Kontaktieren eines Pols der Batteriezelle erforderliche ebene Fläche bereitstellen. Die Schweißfläche kann insbesondere an die Erhebung des Deckels der Batteriezelle angepasst sein. Der Federkontakt kann insbesondere auf den Pluspol der Batteriezelle geschweißt werden.

Der Federkontakt kann insbesondere mittels eines Laserschweißverfahrens an den Pol der Batteriezelle angeschweißt werden. Durch das Laserschweißen kann ein Eintrag von Wärme und/oder mechanischer Belastung in die Batteriezelle minimiert werden.

Ein Kontaktarm kann ein im Wesentlichen streifenförmiger oder zungenförmiger Fortsatz der Schweißfläche sein. Der Kontaktarm kann zumindest eine Biegestelle aufweisen. Die Biegestelle kann neben der Schweißfläche angeordnet sein. Die Biegestelle kann einen Biegeradius aufweisen. An der Biegestelle kann der Kontaktarm in einem unbelasteten Zustand um deutlich mehr als 90°, beispielsweise um zwischen 100° und 170°, vorzugsweise zwischen 110° und 160°, aus einer Ebene der Schweißfläche gebogen sein. Der Kontaktarm kann im unbelasteten Zustand insbesondere etwa um 135° aus der Ebene der Schweißfläche zurück über die Schweißfläche gebogen sein.

Ein Kontaktpartner kann eine Bodenfläche einer anderen Batteriezelle oder eine andere elektrisch leitende Fläche sein. Beispielsweise kann der Kontaktpartner ein Zellverbinder zum Verbinden von nebeneinander angeordneten Batteriezellen oder ein Terminal eines Batteriemoduls sein.

Der Kontaktarm kann nach dem Schweißen über die Schweißfläche gebogen werden. Wenn vor dem Biegen geschweißt wird, kann beispielsweise eine ringförmige Schweißnaht geschweißt werden, da keine Kontaktarme zwischen einem Laseraustrittspunkt und der Schweißfläche angeordnet sind.

Alternativ können die Kontaktarme vor dem Schweißen über die Schweißfläche gebogen werden. Dann kann durch zumindest eine Aussparung zwischen zwei benachbarten Kontaktarmen geschweißt werden. Ebenso kann an den Kontaktarmen vorbei geschweißt werden. Der Laser kann stark fokussiert werden und durch die Aussparung zwischen den Kontaktarmen gesteuert werden. Pro Aussparung kann eine linienförmige Schweißnaht geschweißt werden. Insbesondere können mehrere nebeneinander angeordnete linienförmige Schweißnähte durch unterschiedliche Aussparungen geschweißt werden. Durch das Biegen vor dem Schweißen können mechanische Belastungen der Batteriezelle minimiert werden.

Ein freies Ende des zumindest einen Kontaktarms kann in Richtung der Schweißfläche gebogen sein. Durch die Biegung kann der Kontaktarm einen höchsten Bereich, d.h. einen höchsten Punkt, eine höchste Linie oder eine höchste Fläche, über der Schweißfläche aufweisen, d.h. einen Bereich, in dem der Kontaktarm in axialer Richtung maximal von der Schweißfläche beabstandet ist. Der höchste Bereich kann einen Kontaktbereich beziehungsweise einen Kontaktpunkt zu dem Kontaktpartner bilden. Der Kontaktarm kann beispielsweise einen Knick zurück in Richtung der Schweißfläche aufweisen, d.h. Bereiche des Kontaktarms angrenzend vor und hinter dem höchsten Bereich sind näher zu der Schweißfläche als der höchste Bereich. Ebenso kann der Kontaktarm bogenförmig ausgebildet sein. Durch eine Bogenform kann eine vergrößerte Kontaktfläche zu dem Kontaktpartner erreicht werden. Der höchste Bereich kann insbesondere näherungsweise mittig über der Schweißfläche angeordnet sein.

Das freie Ende kann in einer eingefederten Lage an der Schweißfläche abgestützt sein. Das freie Ende kann in der eigefederten Lage an der Schweißfläche anliegen. Durch eine Abstützung an der Schweißfläche kann der Kontaktarm eine progressive, insbesondere eine nicht-linear progressive Federkennlinie aufweisen. Vor einem Zeitpunkt des Kontakts kann der Kontaktarm eine weiche Federkennlinie aufweisen. Ab dem Zeitpunkt des Kontakts kann der Kontaktarm eine härtere Federkennlinie aufweisen. Das freie Ende kann über die Schweißfläche gleiten. Zum Verbessern des Gleitens kann das freie Ende gerundet sein oder eine Gegenbiegung von der Schweißfläche weg aufweisen.

Der Federkontakt kann zumindest einen weiteren Kontaktarm aufweisen. Die Kontaktarme können beabstandet zueinander nebeneinander aus der Seite der Schweißfläche ragen. Ein lateraler Abstand zwischen Kontaktarmen, die von der gleichen Seite der Schweißfläche weg ragen, kann hierbei prinzipiell kleiner als eine Breite der Kontaktarme sein. Es kann jedoch auch bevorzugt sein, dass dieser Abstand gleich oder größer als die Breite der Kontaktarme ist.

Alternativ oder ergänzend können mehrere Kontaktarme beabstandet zueinander an gegenüberliegenden Seiten der Schweißfläche aus der Schweißfläche ragen. Die Kontaktarme können dann in entgegengesetzten Richtungen über die Schweißfläche gebogen sein. Durch mehrere Kontaktarme kann eine Kontaktfläche zum Kontaktpartner vervielfältigt werden. Ebenso können sich Federraten der mehreren Kontaktarme addieren. Der Federkontakt kann durch mehrere Kontaktarme also mit einer erhöhten Kontaktfläche und einer erhöhten Anpresskraft gegen den Kontaktpartner gepresst werden.

Die aus den gegenüberliegenden Seiten ragenden Kontaktarme können abwechselnd beabstandet zueinander angeordnet sein. Jeweils in entgegengesetzte Richtungen verlaufende mehrere Kontaktarme können dabei lateral versetzt zueinander ineinander greifen, ähnlich wie Finger zweier miteinander verschränkter Hände. Durch eine wechselseitige Anordnung der Kontaktarme kann eine symmetrische Einleitung von Kräften in die Batteriezelle und/oder den Kontaktpartner erreicht werden.

Zwischen zumindest zwei der Kontaktarme kann eine Aussparung zum Verschweißen der Schweißfläche mit dem Pol angeordnet sein. Die Aussparung kann schlitzförmig sein. Durch die schlitzförmige Aussparung kann der Laser eine linienförmige Schweißnaht erzeugen. Die Aussparung kann je nach gewünschter Form der Schweißnaht geradlinig oder gebogen sein. Die Aussparung kann auch größer sein. Dann kann der Laser eine ringförmige oder andersförmige Schweißnaht durch die Aussparung erzeugen. Aufgrund der Aussparung kann der Federkontakt vor dem Verbinden mit der Batteriezelle fertig gebogen werden. Dadurch können Wechsel zwischen Biegeanlage und Schweißanlage minimiert werden.

### Kurze Figurenbeschreibung

Nachfolgend wird ein vorteilhaftes Ausführungsbeispiel der Erfindung unter Bezugnahme auf die begleitenden Figuren erläutert. Es zeigen:
Fig. 1 eine Darstellung einer Batteriezelle mit einem Federkontakt gemäß einem Ausführungsbeispiel;
Fig. 2 Darstellungen von Lagetoleranzen bei einem Federkontakt gemäß einem Ausführungsbeispiel;
Fig. 3 eine Darstellung eines Verfahrensablaufs zum Herstellen einer Batteriezelle gemäß einem Ausführungsbeispiel; und
Fig. 4 eine Darstellung eines alternativen Verfahrensablaufs zum Herstellen einer Batteriezelle gemäß einem Ausführungsbeispiel.

Die Figuren sind schematische Darstellungen und dienen nur der Erläuterung der Erfindung. Gleiche oder gleichwirkende Elemente sind durchgängig mit den gleichen Bezugszeichen versehen.

### Detaillierte Beschreibung

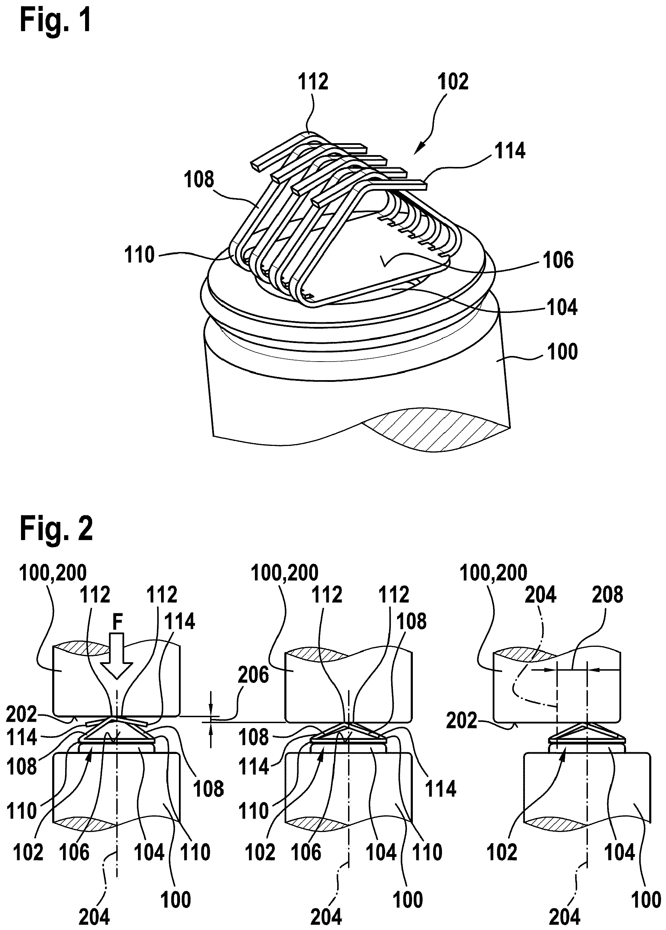

Fig. 1 zeigt eine Darstellung einer Batteriezelle 100 mit einem Federkontakt 102 gemäß einem Ausführungsbeispiel. Die Batteriezelle 100 ist beispielsweise für eine Traktionsbatterie eines Elektrofahrzeugs vorgesehen. Die Batteriezelle 100 ist eine Rundzelle, wie beispielsweise eine 18650 oder weist eine Gehäuseform mit anderen Abmessungen auf. Die Batteriezelle 100 kann beispielsweise ein Lithium-Ionen Akkumulator sein.

Der Federkontakt 102 ist mittig auf einen Pol 104 der Batteriezelle 100 geschweißt. Der Federkontakt 102 ist ein Stanzbiegeteil aus Metallblech. Der Federkontakt 102 weist eine Schweißfläche 106 und zumindest einen Kontaktarm 108 auf. Der Kontaktarm 108 ragt aus einer Seite der Schweißfläche 106. Der Kontaktarm 108 ist zurück über die Schweißfläche 106 gebogen. Damit ist der Kontaktarm 108 über eine Mitte der Batteriezelle 100 gebogen.

Die Schweißfläche 106 ist hier näherungsweise rechteckig und flach. Der Kontaktarm 108 weist neben der Schweißfläche 106 eine Biegung 110 um ca. 135° auf. Die Biegung 110 ist mit einem Biegeradius ausgeführt.

Im hier dargestellten Ausführungsbeispiel weist der Federkontakt 102 acht Kontaktarme 108 auf. Je vier der Kontaktarme 108 ragen auf entgegengesetzten Seiten der Schweißfläche 106 aus der Schweißfläche 106. Die Kontaktarme 108 sind abwechselnd angeordnet und überschneiden sich über einer Mitte der Kontaktfläche 106. Die Kontaktarme 108 sind in einem unbelasteten Zustand dargestellt. Freie Enden 112 der Kontaktarme 108 sind entfernt von der Schweißfläche 106 angeordnet.

In einem Ausführungsbeispiel weisen die Kontaktarme 108 einen Knick 112 auf. Freie Enden 114 der Kontaktarme 108 sind in Richtung der Schweißfläche 106 gebogen. Dadurch ist der Knick 112 an einem höchsten Punkt über der Schweißfläche 106 angeordnet. Die freien Enden 114 weisen im unbelasteten Zustand weiterhin einen Abstand zur Schweißfläche 106 auf. An dem Knick 112 findet ein Kontakt zu einem Kontaktpartner statt. Der Knick 112 ist hier mit einem geringeren Biegeradius als die Biegung 110 ausgeführt. Der höchste Punkt 114 kann auch als Bogen ausgeführt sein, um eine vergrößerte Kontaktfläche zum Kontaktpartner zu ermöglichen.

Der Knick 112 ist im Wesentlichen mittig über den entgegengesetzten Seiten der Schweißfläche 106 angeordnet.

Bei dem Kontakt zu dem Kontaktpartner werden die Kontaktarme 108 elastisch verbogen. Dadurch wird der Knick 112 mit einer resultierenden Rückstellkraft gegen den Kontaktpartner gepresst.

Fig. 2 zeigt Darstellungen von Lagetoleranzen bei einem Federkontakt 102 gemäß einem Ausführungsbeispiel. Der Federkontakt 102 ist mit dem Pol 104 einer Batteriezelle 100 verschweißt und entspricht im Wesentlichen dem Federkontakt in Fig. 1. Hier ist ein Kontaktpartner 200 des Federkontakts 102 dargestellt. Der Kontaktpartner 200 ist hier eine Bodenfläche 202 einer anderen Batteriezelle 100, kann aber beispielsweise auch ein Zellverbinder eines Batteriemoduls oder ein Terminal des Batteriemoduls sein. Beim Berühren entsteht ein elektrisch leitender Kontakt zwischen dem Pol 104 und dem Kontaktpartner 200.

Die Knicke 112 der Kontaktarme 108 sind beim Berühren des Kontaktpartners 200 im Bereich um eine Mittenebene 204 der Batteriezelle 100 angeordnet. Die freien Enden 114 sind beabstandet von der Schweißfläche 106. Wenn der Kontaktpartner 200 mit einer Kraft F gegen die Batteriezelle 100 gedrückt wird, verformen sich die Kontaktarme 108 insbesondere an der Biegung 110 elastisch und die Knicke 112 gleiten an dem Kontaktpartner 200 entlang in Richtung der Mittenebene 204. Die Verformung ist abhängig von der Kraft F und einer Federhärte der Kontaktarme 108.

Die freien Enden 114 bewegen sich mit zunehmender Kraft F in Richtung der Schweißfläche 106 bis sie an der Schweißfläche 106 anliegen. Wenn die freien Enden 114 an der Schweißfläche 106 anliegen wird ein Teil der Kraft F über die freien Enden 114 auf der Schweißfläche 106 abgestützt. Dadurch wird die Federhärte der Kontaktarme 108 wesentlich größer, da ab dem Anliegen die Knicke 112 zusätzlich zu den Biegungen 110 elastisch verformt werden.

Zwischen dem Berühren des Kontaktpartners 200 und dem Anliegen der freien Enden 114 an der Schweißfläche können die Knicke 112 in axialer Richtung um eine axiale Toleranz 206 bewegt werden. Innerhalb der axialen Toleranz 206 wird der elektrisch leitende Kontakt durch die Elastizität der Kontaktarme 108 aufrechterhalten.

Da die Knicke 112 im Wesentlichen mittig über der Schweißfläche 106 angeordnet sind, kann der elektrisch leitende Kontakt zum Kontaktpartner 200 über eine große laterale Toleranz 208 aufrechterhalten werden. Bei einer Batteriezelle 100 als Kontaktpartner 200 kann der elektrisch leitende Kontakt aufrechterhalten werden, solange die Knicke 112 an der Bodenfläche 202 anliegen.

Zusätzlich zu der axialen Toleranz 206 und der lateralen Toleranz 208 kann der elektrisch leitende Kontakt auch innerhalb einer Winkeltoleranz aufrechterhalten werden.

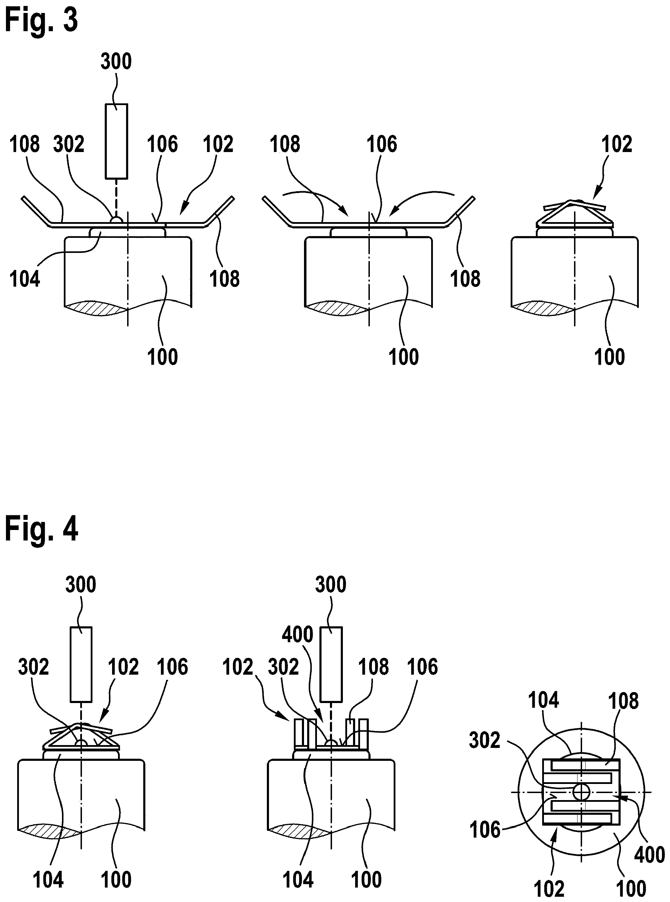

Fig. 3 zeigt eine Darstellung eines Verfahrensablaufs zum Herstellen einer Batteriezelle 100 gemäß einem Ausführungsbeispiel. Die Batteriezelle entspricht dabei im Wesentlichen den Batteriezellen in den Fign. 1 und 2. Hier wird ein teilweise vorgefertigter Federkontakt 102 auf den Pol 104 der Batteriezelle 100 mittels eines Lasers 300 geschweißt. Dabei ragen die Kontaktarme 108 noch seitlich aus der Schweißfläche 106. Die Kontaktarme 108 sind noch nicht über die Schweißfläche 106 gebogen. Dadurch bilden die Kontaktarme 108 kein Hindernis für den Laser 300 und der Laser 300 kann eine Schweißnaht 302 ohne räumliche Einschränkungen erzeugen.

Nach dem Schweißen werden die Kontaktarme 108 von beiden Seiten über die Schweißfläche 106 gebogen, um die Batteriezelle 100 fertig für die Montage zu machen.

Fig. 4 zeigt eine Darstellung eines alternativen Verfahrensablaufs zum Herstellen einer Batteriezelle 100 gemäß einem Ausführungsbeispiel. Die Batteriezelle entspricht dabei im Wesentlichen den Batteriezellen in den Fign. 1 und 2. Hier wird ein fertig gebogener Federkontakt 102 auf den Pol mittels eines Lasers 300 geschweißt. Damit der Laser 300 eine Schweißnaht 302 schweißen kann, weist der Federkontakt 102 eine Aussparung 400 zwischen zumindest zwei Kontaktarmen 108 auf. Der Laser 300 kann durch die Aussparung 400 auf die Schweißfläche 106 fokussiert werden. Durch den fertigen Federkontakt 102 kann ein Biegen des verschweißten Federkontakts 102 vermieden werden und eine Einleitung der erforderlichen Biegekräfte in die Batteriezelle 100 verhindert werden.

In einem Ausführungsbeispiel ist die Aussparung 400 lediglich ein geringfügig vergrößerter Abstand zwischen zwei Kontaktarmen 108. Durch diese Aussparung kann der Laser 300 eine strichförmige Schweißnaht 302 in der Schweißfläche und dem Pol 104 erzeugen. Der Federkontakt 102 kann auch mehrere nebeneinanderliegende Aussparungen 400 aufweisen, um mehrere nebeneinanderliegende Schweißnähte 302 erzeugen zu können.

In einem Ausführungsbeispiel ist für die Aussparung 400 zumindest einer der Kontaktarme 108 entfallen. So kann der Laser 300 auch beispielsweise eine ringförmige Schweißnaht 302 in dem Pol und der Schweißfläche 106 erzeugen. Die Aussparung 400 ist hier zentral angeordnet. Auf beiden Seiten der Aussparung 400 ist die gleiche Anzahl Kontaktarme 108 angeordnet.

Mit anderen Worten wird eine axiale Kontaktierung von Batterie-Zellen vorgestellt.

Bei der Kontaktierung über Krone erfolgt die Kontaktierung radial am Außendurchmesser der Zelle. Während des Fügevorgangs einer Zelle zur anderen ist eine geringe Abweichung der Konzentrizität der Zellen ein wichtiger Faktor. Bei zu großer Exzentrizität besteht die Gefahr, dass die Zinken der Krone verbogen werden und die geforderte Kontaktierung dadurch nicht gewährleistet ist. Auch können sich bei vielen Zellen in Reihe die axialen Toleranzen negativ auf die Kontaktierfähigkeit auswirken. Es besteht die Gefahr, dass Zellen aus der Kontaktierung rutschen.

Durch die hier vorgestellte axiale Kontaktierung ist der Achsversatz der Zellen zueinander in viel größeren Toleranzen möglich.

Der hier vorgestellte Ansatz basiert auf der Kontaktierung von Batterien in Alltagsgeräten, wie beispielsweise Fernbedienungen.

Durch den hier vorgestellten Ansatz ergeben sich Vorteile bei der Herstellung, da gröbere Fertigungstoleranzen möglich sind, was zu geringeren Kosten führen kann.

Zum Herstellen der Batteriezelle wird der Federkontakt über einen Schweißprozess auf dem Pol der Rundzelle befestigt. Der Federkontakt besteht aus mehreren kleinen Lamellen die versetzt angeordnet sind. Nach dem Schweißen wird der Federkontakt in seine finale Form gebogen. Es besteht auch die Möglichkeit, über dem Schweißbereich Lamellen entfallen zu lassen, um den Federkontakt vor dem Schweißen in seine finale Form zu bringen.

Über eine Anpresskraft F entsteht ein Kontakt zwischen Rundzelle und Rundzelle. Abhängig von der geforderten minimalen Anpresskraft ist ein Ausgleich von axialen Toleranzen (Montage, Bauteile) möglich. Ein exzentrischer Versatz zwischen den Zellen ist in größerem Umfang möglich.

Da es sich bei der vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft

### BEZUGSZEICHENLISTE

- 100: Batteriezelle
- 102: Federkontakt
- 104: Pol
- 106: Schweißfläche
- 108: Kontaktarm
- 110: Biegung
- 112: Knick
- 114: freies Ende

- 200: Kontaktpartner
- 202: Bodenfläche
- 204: Mittenebene
- F: Kraft
- 206: axiale Toleranz
- 208: laterale Toleranz

- 300: Laser
- 302: Schweißnaht

- 400: Aussparung

## Patentansprüche

1. Federkontakt (102) für eine Batteriezelle (100), wobei der Federkontakt (102) eine Schweißfläche (106) zum Verschweißen mit einem Pol (104) der Batteriezelle (100) und zumindest einen seitlich aus der Schweißfläche (106) ragenden, federnden Kontaktarm (108) zum Kontaktieren eines Kontaktpartners (200) der Batteriezelle (100) aufweist, wobei der Kontaktarm (108) aus einer Ebene der Schweißfläche (106) heraus zurück über die Schweißfläche (106) gebogen ist.

2. Federkontakt (102) gemäß Anspruch 1, bei dem ein freies Ende (114) des Kontaktarms (108) in Richtung der Schweißfläche (106) gebogen ist.

3. Federkontakt (102) gemäß Anspruch 2, bei dem das freie Ende (114) in einer eingefederten Lage an der Schweißfläche (106) abgestützt ist.

4. Federkontakt (102) gemäß einem der vorhergehenden Ansprüche, mit zumindest einem weiteren Kontaktarm (108), wobei die Kontaktarme (108) beabstandet zueinander nebeneinander aus der Seite der Schweißfläche (106) ragen.

5. Federkontakt (102) gemäß einem der vorhergehenden Ansprüche, mit zumindest einem weiteren Kontaktarm (108), wobei die Kontaktarme (108) beabstandet zueinander an gegenüberliegenden Seiten der Schweißfläche (106) aus der Schweißfläche (106) ragen und in entgegengesetzten Richtungen über die Schweißfläche (106) gebogen sind.

6. Federkontakt (102) gemäß Anspruch 4 und 5, bei dem die aus den gegenüberliegenden Seiten ragenden Kontaktarme (108) abwechselnd beabstandet zueinander angeordnet sind.

7. Federkontakt (102) gemäß einem der Ansprüche 4 bis 6, bei dem zwischen zumindest zwei der Kontaktarme (108) eine Aussparung (400) zum Verschweißen der Schweißfläche (106) mit dem Pol (104) angeordnet ist.

8. Batteriezelle (100) mit einem Federkontakt (102) gemäß einem der Ansprüche 1 bis 6, wobei die Schweißfläche (106) auf einen Pol (104) der Batteriezelle (100) geschweißt ist und der zumindest eine Kontaktarm (108) über eine von der (100) Batteriezelle abgewandte Seite der Schweißfläche (106) gebogen ist.

9. Verfahren zum Herstellen einer Batteriezelle (100) mit einem Federkontakt (102), wobei eine Schweißfläche (106) des Federkontakts (102) auf einen Pol (104) der Batteriezelle (100) geschweißt wird und zumindest ein seitlich aus der Schweißfläche (106) ragender Kontaktarm (108) des Federkontakts (102) zurück über die Schweißfläche (106) gebogen wird.

10. Verfahren gemäß Anspruch 9, bei dem der Kontaktarm (108) nach dem Schweißen zurückgebogen wird.

11. Verfahren gemäß Anspruch 9, bei dem der Kontaktarm (108) vor dem Schweißen zurückgebogen wird, wobei die Schweißfläche (106) durch zumindest eine Aussparung (400) zwischen zwei benachbarten Kontaktarmen (108) auf den Pol (104) geschweißt wird.
